Europäisches Patentamt

European Patent Office

Office européen des brevets

(19)

(11) Veröffentlichungsnummer: **0 089 919 B1**

# EUROPÄISCHE PATENTSCHRIFT

(12)

(45) Veröffentlichungstag der Patentschrift: 29.05.91

(51) Int. Cl.⁵: **H04N  7/13**

(21) Anmeldenummer: 83730031.8

(22) Anmeldetag: 18.03.83

(54) Verfahren und Schaltungsanordnungen zur Aufbereitung digitaler Bewegtbildsignale.

(30) Priorität: 19.03.82 DE 3210690

(43) Veröffentlichungstag der Anmeldung:
28.09.83 Patentblatt  83/39

(45) Bekanntmachung des Hinweises auf die
Patenterteilung:
29.05.91 Patentblatt  91/22

(84) Benannte Vertragsstaaten:
AT BE CH DE FR GB IT LI LU NL SE

(56) Entgegenhaltungen:
DE-A- 1 956 850
US-A- 4 307 420
US-A- 4 371 895

(73) Patentinhaber: Heinrich-Hertz-Institut für
Nachrichtentechnik Berlin GmbH
Einsteinufer 37
W-1000 Berlin 10(DE)

(72) Erfinder: Kummerow, Thomas, Dr.-Ing.
Boumannstrasse 17 i
W-1000 Berlin 28(DE)

(74) Vertreter: Wolff, Konrad
Heinrich-Hertz-Institut für Nachrichtentechnik Berlin GmbH Einsteinufer 37
W-1000 Berlin 10(DE)

## Beschreibung

Die Erfindung bezieht sich auf ein Verfahren zur Aufbereitung digitaler Bewegtbildsignale für eine Übertragung mit geringer Datenrate und gleichmäßigem Datenfluß auf dem Übertragungsweg, wobei geänderte Bildanteile nach der Methode der Bild-zu-Bild-Ergänzung

a) auf der Sendeseite synchron zur Folgefrequenz der zugeführten, aktuellen Bilddaten als Abweichungen zwischen diesen und den rastermäßig entsprechenden, zeitlich um eine Vollbild-Abtastperiode zurückliegenden und auch für die Empfangsseite bereitgestellten Bilddaten bestimmt
und

b) auf der Empfangsseite zur Bildrekonstruktion in das vorliegende Vollbild an den betreffenden Stellen eingefügt werden,

sowie auf Schaltungsanordnungen für die Sende- und die Empfangsseite, die besonders für die Ausführung dieses Verfahrens entwickelt sind.

Der Stand der Technik, von dem hierbei ausgegangen wird, ist bezüglich einer Redundanzverringerung in der DE-A-19 56 850, sehr ähnlich auch in der US-A-3 603 725 offenbart. Eine solche Methode der Bild-zu-Bild-Ergänzung (conditional replenishment) dient dazu, bei einem Bewegtbildsignal (Videosignal) zur Einsparung von Übertragungskapazität nur diejenigen Teile eines Einzelbildes aus der Bewegtbildfolge vom Sender an die Empfänger zu übermitteln, die sich gegenüber dem vorangegangenen Einzelbild geändert haben.

Die beim o.g. Stand der Technik angewendete Methode zur Redundanzverringerung beruht darauf, die z.B. von einer Fernsehkamera gelieferten Signale nach A/D-Wandlung als digitale Wörter für einen vollständigen Rahmen von Video-Abtastwerten in einem Bezugs-Rahmenspeicher aufzunehmen und ein neues Digitalwort nur dann zur Übertragung bereitzustellen, wenn es von dem ihm rastermäßig entsprechenden, gespeichertenWort um eine Schwellwert-Differenz abweicht. Digitalwörter, die diese Abweichung zeigen, treten je nach Aktivität der aufgenommenen Szene in unterschiedlicher Anzahl und unregelmäßig auf, sollen aber mit gleichmäßiger Bitfrequenz zum Übertragungskanal gelangen. Hierzu dient in herkömmlicher Weise ein Pufferspeicher, in den die unregelmäßig auftretenden Digitalwörter gelangen und aus dem sie in regelmäßiger Folge entnommen werden. Zur Steuerung des Füllgrades des Pufferspeichers wird die zu benutzende Schwellwertdifferenz variiert. Damit läßt sich ein Über- bzw. ein Leerlaufen des Pufferspeichers verhindern.

Allerdings verhält sich die Qualität des rekonstruierten Bildes umgekehrt proportional zur Aktivität der aufgenommenen Szene. Dies ist das eigentliche Problem, dem gemäß der oben genannten US-A- 3 603 725 dadurch begegnet werden soll, daß mittels eines Adressenvergleichs zur Übertragung bereitgehaltene Digitalwörter dann übersprungen werden, wenn bereits ein rastermäßig entsprechendes, neues Digitalwort vorliegt. Gemäß der DE-A-19 56 850 lassen sich mehrere derartige Video-Kanäle, für die in einer hohen Hierarchieebene ein gemeinsamer Übertragungsweg hoher Kapazität zur Verfügung steht, durch Zeitmultiplex-Behandlung verschachteln. Im Ergebnis wird dadurch bei vorgegebener Größe der Pufferspeicher die sonst für irgendeinen dieser Kanäle während eines Zeitabschnitts großer Aktivität auftretende starke Bildverschlechterung auf Kosten geringfügiger Erhöhungen der Bildverschlechterung in jedem der übrigen Video-Kanäle stark verringert.

Weitere Möglichkeiten, die zur Verfügung stehende Kanalkapazität hinsichtlich der erzielbaren Bildqualität besser zu nutzen, bieten Methoden zur Datenreduktion. Dabei werden geänderte Bilddatenworte nicht absolut, sondern z.B. die betreffendenDifferenzen und diese dazu noch in kodierter Form übertragen.

Aus Veröffentlichungen, die dieses technische Gebiet betreffen, z.B. US-A-4 006 297, BSTJ Vol. 50 No. 6, 1889 bis 1917; BSTJ Vol. 51 No. 1, 239 bis 259, IEEE Trans.COM Vol. 24 No. 10, 1175 bis 1180, sind Lösungen für die technische Realisierung senderseitiger Kodier- sowie empfängerseitiger Dekodiereinrichtungen zu entnehmen. Dabei erfolgt sowohl die Erkennung als auch die geeignete Kodierung der geänderten Bildanteile synchron zur Folgefrequenz der zugeführten Bilddatenworte. Dementsprechend sind dort alle Schaltungsteile für eine hohe Arbeitsgeschwindigkeit auszulegen, auch dann, wenn sie nur während eines Teiles der verfügbaren Zeit benötigt und genutzt werden, weil - wie weiter oben schon dargelegt - die zu verarbeitenden Änderungen unregelmäßig verteilt und mit unterschiedlicher Ausdehnung auftreten. Damit für die Übertragung ein gleichmäßiger Datenfluß am Ausgang des senderseitigen Encoders zur Verfügung steht, wird auch bei diesen bekannten Lösungen ein kanalseitiger Pufferspeicher vorgesehen. Dementsprechend benötigen die Empfänger für die Dekodierung ebenfalls einen kanalseitigen Pufferspeicher am Eingang, mit dem die gleichmäßig eintreffenden, geänderten Daten zu den tatsächlich erforderlichen, ungleichmäßig verteilten Zeitpunkten und Zeiträumen für die Bildrekonstruktion bereitgestellt werden.

Diese konventionellen Bild-zu-Bild- (Interframe-) Kodierverfahren gehen auch von der Methode des "conditional replenishment" aus und erzielen u.U. eine beträchtliche zusätzliche Datenreduktion der zu übertragenden digitalen Bildinformation. Deren grundsätzliche Arbeitsweise läßt sich wie folgt erläutern:

Ein Segmentierer erhält als Eingangssignale aktuelle, zu übertragende sowie die rastermäßig entsprechenden, um eine Vollbildperiode verzögerten Bildinformationen, die verzögerten über einen Dekodierer möglichst in der Form, wie sie auch dem Empfänger zur Verfügung stehen. Daraus wird eine Entscheidung abgeleitet, ob eine signifikante Änderung von einem Vollbild zum nächsten stattgefunden hat. Im allgemeinen entstehen dabei zusammenhängende, als geändert erkannte Gruppen von Bildpunkten (Segmente einer Bildzeile).

Ein Kodierer hat die Aufgabe, die Bildinformation in den als geändert erkannten Segmenten mit möglichst wenigen Binärzeichen darzustellen, die zum Empfänger zu übertragen sind. In den Bildteilen, die nicht geändert sind, wird nichts übertragen.

Ein Halb- und Vollbildspeicher, der eine Signalverzögerung um eine Vollbild-Abtastperiode zuläßt, erhält genau diejenige neue Information in dekodierter Form eingeschrieben, die auch zum Empfänger übertragen wird. Die verzögerte Bildinformation wird sowohl vom Segmentierer als auch vom Kodierer verwendet. Wegen der ungleichmäßig im Bild verteilten geänderten Segmente ist auch eine Adressenübertragung notwendig. Die Adressen werden von einem Adress-Koder an einen Multiplexer geliefert. Der Kodierer erzeugt einen ungleichmäßigen Datenfluß, der durch die Verwendung eines Pufferspeichers zwischen dem Multiplexer und dem Kanal ausgeglichen werden muß.

Der Dekoder eines Empfangsgerätes benötigt einen entsprechenden Pufferspeicher an seinem Eingang. In diesem wird die übertragene Information mit gleichmäßiger Datenrate eingeschrieben. Das Auslesen erfolgt nach Trennung der Adressen- und Bilddaten in einem Demultiplexer in ungleichmäßiger Folge immer dann, wenn ein übertragenes, geändertes Bildsegment in das rekonstruierte Bild einzufügen ist. Die Aktualisierung der in einem empfangsseitigen Halb- und Vollbildspeicher vorliegenden Daten erfolgt über einen Adress-Dekoder und einen Dekodierer für die Bilddaten.

Die im Koder und Dekoder verwendeten Bildspeicher besitzen normalerweise eine Speicherkapazität entsprechend einem digitalisierten Vollbild. Für ein schwarz-weiß Bild der 625-Zeilen-Norm sind dies ca. 300 KByte. Die Pufferspeicher müssen etwa die in einer Vollbild-Periode zu übertragende Informationsmenge aufnehmen können. Bei 2 Mbit/s Übertragungsrate entspricht dies ca. 10 KByte. Die Arbeitsgeschwindigkeit der verwendeten Elektronik bei diesen konventionellen Schaltungen muß die Kodierung oder Dekodierung eines einzelnen Bildpunktes innerhalb eines Abtasttaktes (z.B. 100 ns) erlauben.

Die Erfindung zielt darauf ab, zu einer wirtschaftlichen technischen Realisierung der für die Aufbereitung der Bewegtbildsignale erforderlichen Schaltungsteile zu gelangen. Dabei sollen bisherige und neuartige, sowohl sender- als auch empfängerseitige Einrichtungen voll kompatibel sein. Als erstes Ziel der Erfindung, das einen - oder den - wesentlichen Schritt in dieser Richtung darstellt, ist deshalb zunächst eine neue Arbeitsweise für eine solche Aufbereitung von Bewegtbildsignalen aufzuzeigen, die als Verfahren kategorisierbar ist. Für diese Signal-Aufbereitung ist von wesentlicher Bedeutung, daß sich Vorgänge der Redundanz- und Datenreduktion, die mit geringer Arbeitsgeschwindigkeit ablaufen können, und solche, die mit hoher Arbeitsgeschwindigkeit ablaufen müssen, auffinden und einander in vorteilhafter Weise zuordnen lassen. Für die technische Realisierung der zugehörigen Schaltungsanordnungen ergeben sich auf einer solchen Grundlage aufwandgünstige Möglichkeiten mit speziellen Schaltkreisen, VLSI-Schaltkreisen oder Prozessoren.

Die erfindungsgemäße Lösung dafür besteht, ausgehend vom eingangs genannten, in der DE-A-19 56 850 bzw. US-A-3 603 725 offenbarten Redundanzverringerungs-System, darin, daß die Aufbereitung der Bewegtbildsignale

a) auf der Sendeseite einen Kodiervorgang einschließt,

- der die Daten für die Übertragung weiter reduziert,
- dessen Arbeitsgeschwindigkeit durch die Datenrate des Übertragungsweges bestimmt ist,
- zu dessen Steuerung zwischengespeicherte Änderungsentscheidungen als Informationen bezüglich der Lage und Ausdehnung erkannter Bild-zu-Bild-Abweichungen dienen,
- dem zwischengespeicherte Bilddatenworte nach variabler Verzögerungszeit zugeführt werden,
- der digitale, kodierte Bildinformationen für Bildsegmente in einem kontinuierlichen, gleichmäßigen Datenfluß für den Übertragungsweg erzeugt; und

b) auf der Empfangsseite darin besteht:

- die gleichmäßig eintreffenden kodierten Bildinformationen in direkter Verarbeitung, ohne Zwischenspeicherung am Eingang, zu dekodieren,
- Bilddaten mit Hilfe der zugehörigen Adressdaten der Bildrekonstruktion zuzuführen, bei der die Aktualisierung der in einem Bildspeicher befindlichen Bilddaten als Bild-zu-Bild-Ergänzung zu den tatsächlich erforderlichen Zeitpunkten und Zeitspannen erfolgt,
- die vorgenommenen Bild-zu-Bild-Ergänzungen erst nach einer Verzögerungszeit, die zwischen Null und der Dauer einer Vollbild-Abtastperiode betragen kann, wiederzugeben.

Von ausschlaggebender Bedeutung für die Erfindung ist bei der sendeseitigen Signalaufbereitung die quellenseitige Pufferung der noch nicht kodierten Bilddaten. Die Erkennung geänderter Bildanteile erfolgt zwar - wie auch bei den bekannten Methoden - synchron zur Folgefrequenz der zugeführten Bilddatenworte. Allerdings werden nunmehr auch Änderungsentscheidungen - z.B. als Adressen - zwischengespeichert und ermöglichen somit zu einem späteren Zeitpunkt einen augenblicklichen Zugriff zu den Bilddaten der geänderten Bildsegmente. Der Kodiervorgang kann nun kontinuierlich ablaufen, und zwar so, daß für die Übertragung über einen Kanal mit konstanter, niedriger Übertragungsrate stets genau die erforderliche Informationsmenge erzeugt wird, womit sich auf der Sendeseite eine kanalseitige Zwischenspeicherung der zu übertragenden kodierten Information erübrigt.

Auch die empfängerseitigen Dekodierer können die kontinuierlich eintreffenden Signale direkt, d.h. auch hier ohne kanalseitige Zwischenspeicherung, verarbeiten. Dabei wird ein für die Bildrekonstruktion bei den Empfängern ohnehin erforderlicher und vorhandener Bildspeicher auch für die Zwecke der zeitlichen Pufferung mitverwendet.

Für die technische Realisierung von Schaltungsanordnungen sieht die erfindungsgemäße Lösung folgendes vor, und zwar für die Sendeseite: eine Gliederung der Schaltungsteile in:
- einen Eingangspufferspeicher, der mit voneinander unabhängig adressierbaren Schreib- und Lesezugriffen, und vorzugsweise als RAM-Speicher ausgebildet ist,
- einen Bildspeicher, der mit voneinander unabhängig adressierbaren Schreib- und Lesezugriffen und vorzugsweise als RAM-Speicher ausgebildet ist,
- einen Segmentierer zur Bestimmung geänderter Bildanteile durch Vergleichen von Bilddaten aus dem Eingangspufferspeicher und dem Bildspeicher,
- einen Adressenzähler, dessen Ausgang den Schreibzugriff des Eingangspufferspeichers sowie am Bildspeicher den zum Segmentierer führenden Lesezugriff steuert, und in
- eine Baugruppe, in der alle Schaltungsteile eine geringe Arbeitshöchstgeschwindigkeit erfordern, insbesondere mit:
  - einem Zwischenspeicher für Anfangs- und Endadressen von Bildsegmenten, der an den Ausgang des Segmentierers angeschlossen ist,

- einem Übertragungskodierer, der für geänderte Bildanteile die zu übertragenden Ausgangskodeworte erzeugt und diese an einen Multiplexer sowie - vorzugsweise in rekonstruierter Form - an den Schreibzugriff des Bildspeichers liefert,
  - einer Steuerung, die Adressdaten aus dem Zwischenspeicher auswertet und die zum Übertragungskodierer führenden Lesezugriffe des Eingangspufferspeichers und des Bildspeichers mit variabler Verzögerung steuert, sowie
  - dem Multiplexer für das Verschachteln von kodierten Bilddaten, Adress- bzw. Steuerkodeworten, einschließlich P/S-Wandlung, an der Schnittstelle zum Übertragungsweg.

Für die Empfängerseite wird die erfindungsgemäße Schaltungsanordnung gebildet durch eine Gliederung der Schaltungsteile in:
- einen Bildspeicher, der mit voneinander unabhängig adressierbaren Schreib- und Lesezugriffen und vorzugsweise als RAM-Speicher ausgebildet ist,
- einen Adressenzähler, dessen Ausgang den Lesezugriff des Bildspeichers steuert, und in
- eine Baugruppe, in der alle Schaltungsteile eine geringe Arbeitshöchstgeschwindigkeit erfordern, insbesondere mit:
  - einem Übertragungsdekodierer, der Bilddaten für geänderte Bildanteile rekonstruiert und in den Bildspeicher speist, und
  - einem an der Schnittstelle zum Übertragungsweg befindlichen Demultiplexer für die S/P-Wandlung der empfangenen Eingangskodeworte sowie deren Trennung in Bilddaten sowie Adress- bzw. Steuerkodeworte für die Steuerung des Übertragungsdekodierers und von zu ihm führenden Lese- und Schreibzugriffen am Bildspeicher.

Der wesentliche Vorteil besteht bei diesen Ausführungsformen der Erfindung darin, daß wichtige Schaltungsteile eine geringere Arbeitshöchstgeschwindigkeit erfordern und nicht stoßweise, sondern kontinuierlich arbeiten. Besonders bevorzugte Ausführungsformen der Erfindung ermöglichen infolge dieser günstigen Voraussetzungen, die Schaltungen einer Baugruppe, die eine geringe Arbeitshöchstgeschwindigkeit erfordern, in einem programmierbaren Koder bzw. Dekoder-Prozessor zu vereinigen. Diese Voraussetzungen sind auch bei einer VLSI-Realisierung mit speziellen Schaltkreisen von beträchtlicher Bedeutung.

Bei einer bevorzugten Ausgestaltung der erfindungsgemäßen Maßnahmen können die unkodierten Bilddaten mittels eines RAM-Speichers mit der Kapazität eines Vollbildes, unabhängig davon, ob geänderte oder nicht geänderte Bildanteile repräsentiert werden, um eine Zeit zwischen Null und der Dauer einer Vollbild-Abtastperiode verzögert und für die Übertragungskodierung die Daten nicht geänderter Bildanteile beim Auslesen zumindest zum größten Teil übersprungen werden. Dabei nimmt der als Eingangspuffer wirkende RAM-Speicher also alle quellenseitig angelieferten Bilddaten auf und gibt die zu kodierenden mehr oder weniger verzögert ab.

Im wesentlichen werden nur diejenigen Bilddaten ausgelesen und kodiert, welche zu Bildsegmenten, d.h. zu einzelnen oder mehreren zusammenhängenden Bildpunkten gehören, die als geändert erkannt wurden. Mindestens diese Daten müssen im Eingangspuffer zwischengespeichert werden. Aus technischen Gründen ist es jedoch sinnvoller, alle quellenseitig angelieferten Daten geänderter und nicht geänderter Bildanteile zwischenzuspeichern.

Dies ist beispielsweise für eine weitere vorteilhafte Ausgestaltung der erfindungsgemäßen Lösung von Bedeutung, bei der die unkodierten und die kodierten Bilddaten mittels getrennter RAM-Speicher verzögert und zwei unabhängige Zugriffsadressen verwendet werden, die jeweils auf beide RAM-Speicher anzuwenden sind, wobei die eine Zugriffsadresse die Dateneingabe und das Auslesen der für die Segmentierung benötigten kodierten Bilddaten steuert und dabei kontinuierlich alle verfügbaren Adressen durchläuft, während die andere Zugriffsadresse das Auslesen der für die Übertragungskodierung benötigten Bilddaten und das Einschreiben der kodierten Bilddaten steuert und im wesentlichen nur die Adressen durchläuft, die geänderten Bildpunkten entsprechen, und bei der die Differenz beider Adressen den Füllstand der verwendeten Speicher angibt. Der so gewonnene Füllstand kann für eine Beeinflussung der Kodierung benutzt werden.

Eine derartige Beeinflussung des Kodierprogramms kann zweckmäßigerweise darin bestehen, daß der aktuelle Füllstand der RAM-Speicher beim Kodiervorgang bezüglich der zu erzeugenden Datenrate zwecks Verhinderung von Überlauf bzw. Leerlaufen der RAM-Speicher berücksichtigt wird. Während bei geringem Füllstand die Datenrate vergrößert werden kann, ist diese bei großem Füllstand entsprechend zu reduzieren.

Um bei einer derartigen Reduktion der erzeugten Datenrate die Qualitätseinbußen gering zu halten, kann in weiterer Ausgestaltung der erfindungsgemäßen Lehre vorgesehen werden, daß die Informationen bezüglich der Lage und der Ausdehnung geänderter Bildanteile auch zur Beeinflussung der beim Übertragungskodiervorgang zu erzeugenden Datenrate herangezogen werden. Überraschend ist dabei, daß sich Bildanteile innerhalb eines Bereiches, in dem Änderungen vorliegen, die sich selbst aber nicht geändert haben, in ein zu kodierendes Bildsegment einbeziehen lassen und für die Kodierung dann insgesamt weniger Daten benötigt werden als für die Kodierung der einzelnen geänderten Bildanteile innerhalb eines solchen Segments.

Schließlich ergibt sich noch eine bevorzugte Ausgestaltungsmöglichkeit, bei der zur Beeinflussung der beim Übertragungskodiervorgang erzeugten Datenrate der relative Anteil geänderter Bildpunkte am gesamten Füllstand des zur Verzögerung der aktuellen, unkodierten Bilddaten dienenden RAM-Speichers benutzt wird. Hierdurch kann eine Vorausabschätzung über die zu erwartende Datenmenge, die kodiert werden muß, vorgenommen werden, und dementsprechend kann eine noch bessere Steuerung des Kodiervorganges erreicht werden.

In der Zeichnung sind zur näheren Erläuterung der Erfindung Blockschaltbilder angegeben, anhand derer die Arbeitsweise und der schaltungstechnische Aufbau schematisch beschrieben wird. Dabei zeigen:

Fig. 1:    eine Schaltungsanordnung für die Sendeseite,

Fig. 2:    eine Schaltungsanordnung für die Empfängerseite;

Fig. 3:    ein weiteres Blockschaltbild für die Sendeseite und

Fig. 4:    ein weiteres Blockschaltbild für die Empfängerseite.

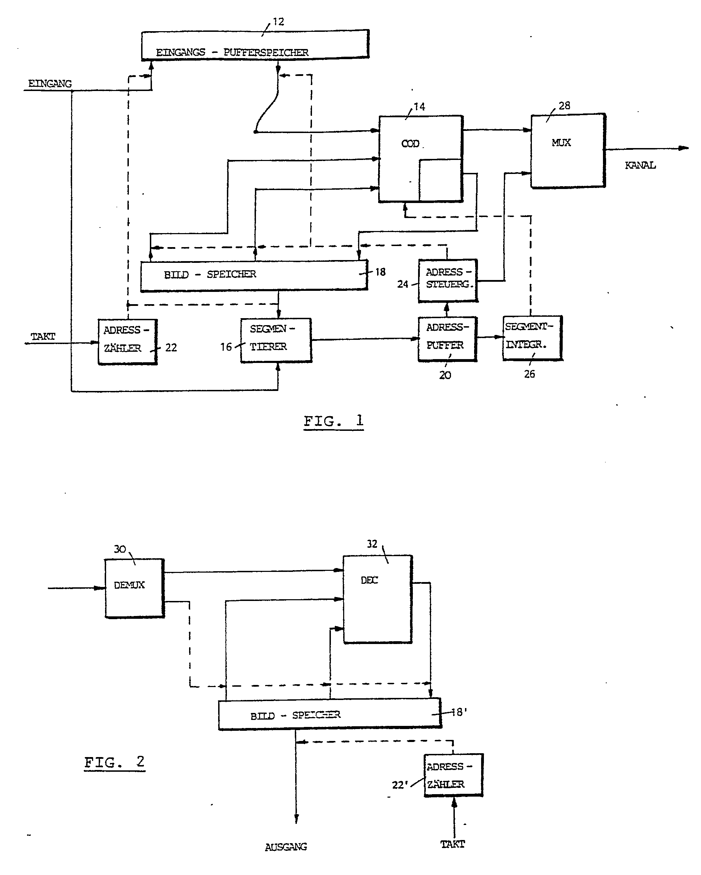

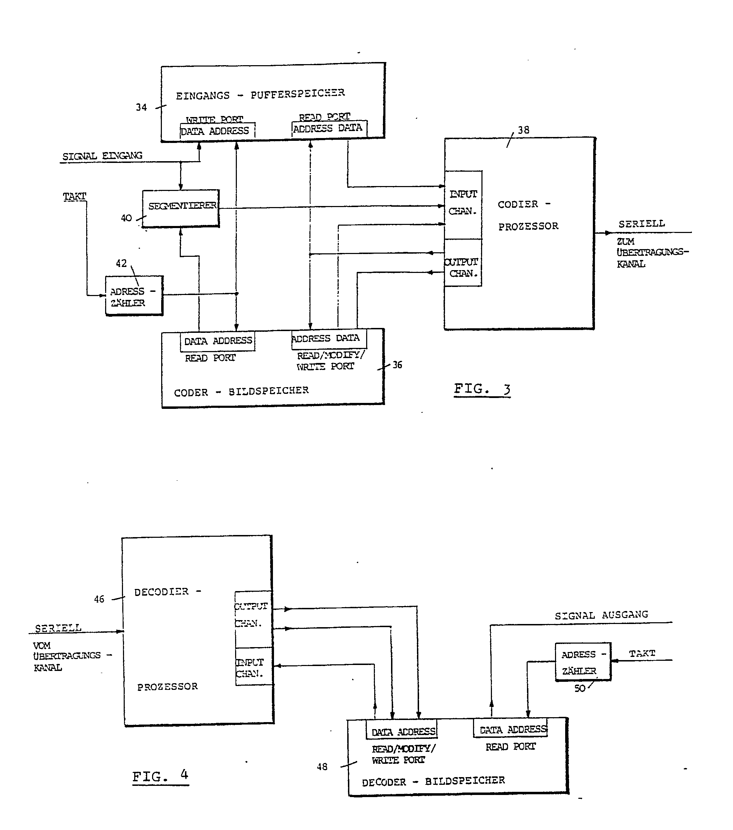

Aufbau und Arbeitsweise des erfindungsgemäßen Systems zur Aufbereitung von Bewegtbildsignalen werden nachfolgend für die Sendeseite im Zusammenhang mit den Fig. 1 und 3 und für Empfängerseite im Zusammenhang mit den Fig. 2 und 4 erläutert.

Die Schaltungsanordnung gemäß Fig. 1 für die Sendeseite ist mit einem Eingangspufferspeicher 12 ausgerüstet. Dieser Puffer 12 nimmt die quellenseitig angelieferten Bilddaten auf und gibt sie nach einer Verzögerungszeit, die zwischen Null und der Dauer einer Vollbild-Abtastperiode variieren kann, an einen Kodierer 14 weiter. Im wesentlichen werden nur diejenigen Bilddaten aus dem Puffer 12 ausgelesen und im Kodierer 14 verarbeitet, die zu Bildsegmenten gehören, welche mit Hilfe eines segmentierers 16 als geändert erkannt wurden. Nur diese Daten müssen mindestens im Puffer 12 gespeichert sein. Vorteilhaft und sinnvoll ist jedoch eine technische Anordnung, bei der alle Eingangsdaten im Puffer 12 aufgenommen werden. Wird der Puffer 12 als RAM-Speicher realisiert, können beim Auslesen die nicht benötigten Adressen übersprungen werden.

Der Segmentierer 16 arbeitet auf konventionelle Weise. Die den Eingang des Kodierers 14 zugeführten Bilddaten und die diesen örtlich zugeordneten, zeitlich um eine Vollbild-Abtastperiode zurückliegenden Bildinformationen, die aus einem Bildspeicher 18 entnommen werden, verwendet der Segmentierer 16 zur Bestimmung der geänderten Bildsegmente. Die über deren Lage und Ausdehnung gewonnene Information wird in eine Adresspuffer-Zwischenspeicher 20 - abgelegt und anschließend mittels einer Steuerung 24 für den Übertragungskodiervorgang verwendet. Diese Zwischenspeicherung kann in Form von Adressen (absolut oder differentiell) oder von Tabellen ("bitmap") erfolgen.

Der Kodierer 14 verwendet die im Eingangs-Puffer 12 verzögerte Eingangsinformation sowie die im Bildspeicher 18 verzögerte, bereits früher kodierte Bildinformation, die um eine weitere Vollbild- und/oder Halbbild-Abtastperiode zeitlich zurückliegt. Die neu kodierte Information wird mit Adressen versehen und über einen Nachrichtenkanal übertragen. Außerdem wird sie in rekonstruierter Form in den Bildspeicher 18 eingeschrieben.

Die Art der Kodierung ist für die Schaltungsanordnung nicht wesentlich. Es kann sich dabei um einfache Verfahren mit Bild-zu-Bild-Prädiktion oder um komplexe Multi-Mode-Kodierungen handeln, sowie um Kodierungen, die eine Bewegungskompensation einschließen.

Der Bildspeicher 18 hat eine Speicherkapazität entsprechend der Digitalinformation eines Vollbildes. Er muß die Möglichkeit des Mehrfachzugriffes besitzen, die sich unter anderen mit einem genügend schnellen RAM-Speicher realisieren läßt.

Die Adressierung des Eingangs-Puffers 12 und des Bildspeichers 18 ist im folgenden unter der Voraussetzung beschrieben, daß es sich um RAM-Speicher handelt, bei denen die Bildpunktadressen den Speicher-Adressen fest zugeordnet sind. Unter dieser Voraussetzung lassen sich zwei voneinander unabhängige Adressierungsmechanismen angeben, die jeweils für beide Speicher eingesetzt werden können.

Die von einem Adresszähler 22 vorgegebene Adresse wird sowohl für den Eingangs-Puffer 12 zum Einschreiben der Eingangsdaten als auch für den Bildspeicher 18 zum Auslesen der korrespondierenden Werte aus dem vorausgegangenen Vollbild verwendet. Diese beiden Werte werden dem Segmentierer 16 zugeführt. Der Adresszähler 22 wird mit dem Bildpunkttakt der eingegebenen Bilddaten getaktet und mit dem Vollbildpuls auf Null zurückgesetzt. Die benutzten Speicheradressen werden - zumindest während der aktiven Zeilendauer - kontinuierlich und lückenlos durchlaufen.

Die aus dem Zwischenspeicher 20 ausgelesenen Informationen über die geänderten Bildsegmente werden von der Adressen-Steuerung 24 verarbeitet und so aufbereitet, daß alle für einen Kodierschritt notwendigen Bilddaten aus dem Eingangs-Puffer 12 und dem Bildspeicher 18 gelesen werden können. Zwischen den dazu notwendigen Einzeladressen bestehen einfache und nicht veränderliche Relationen. Das Fortschalten der Adressen erfolgt mittelbar durch den Kanaltakt, der die sendeseitige Schaltungsanordnung veranlaßt, neue Ausgangskodeworte für die Übertragung bereitzustellen. Innerhalb eines zusammenhängenden Segments werden die Adressen im Normalfall kontinuierlich weitergezählt, die Adressen zwischen einzelnen Segmenten, d.h. für unveränderte Bildteile, werden jedoch ohne Wartezeiten übersprungen.

Die vom Adressen-Zähler 22 und vom Zwischenspeicher 20 vorgegebenen unterschiedlichen Adressen bzw. Adressgruppen sind innerhalb vorgegebener Grenzen voneinander unabhängig; ihr Abstand voneinander entspricht dem Grad der Belegung ( = Füllstand) des Eingangs-Pufferspeichers 12 in einer konventionellen Anordnung.

Beim Eingangs-Puffer 12 muß die vom Adressen-Zähler 22 vorgegebene Einschreibadresse stets der von der Adressen-Steuerung 24 vorgegebenen Ausleseadresse vorauseilen. Der Abstand zwischen diesen Adressen darf beliebig klein, jedoch nicht Null werden. Der Eingangs-Puffer 12 ist dann fast leer, die vollständige Entleerung wird in konventioneller Weise verhindert. Der maximale Abstand zwischen den Adressen ist durch die gesamte Kapazität des Eingangs-Puffers 12 gegeben (z.B. ein Vollbild). Ein für die Kodierung benötigter Wert aus dem Eingangs-Puffer 12 darf nicht durch den nächsten Einschreibvorgang überschrieben werden, bevor er ausgelesen wurde, d.h. der Abstand muß kleiner sein als der genutzte Adressumfang. Ein Überschreiten dieses Abstandes, das einem Pufferüberlauf entspricht, läßt sich durch geeignete Maßnahmen bei der Steuerung des Kodiervorganges verhindern.

Beim Bildspeicher 18 eilt die durch die Adressen-Steuerung 24 vorgegebene Einschreibadresse für neu kodierte Bildpunkte der durch den Adressen-Zähler 22 vorgegebenen Ausleseadresse (für die Segmentierung) voraus. Hier gelten die gleichen Randbedingungen wie beim Eingangs-Puffer 12. Bei Einhaltung der Bedingungen für den Eingangs-Puffer 12 und gleicher Kapazität von Eingangs-Puffer 12 und Bildspeicher 18 sind auch beim Bildspeicher 18 keine unerlaubten Zustände möglich. Konflikte mit weiteren Ausleseadressen beim Bildspeicher 18 (Halbbild- und Vollbildverzögerung, evtl. Zeilenverzögerung) sind nicht möglich, da deren Abstand von der Einschreibadresse konstant bleibt und im erlaubten Bereich liegt.

Ist der Eingangs-Puffer 12 voll, so eilt die Ausleseadresse im Bildspeicher 18 der Einschreibadresse nur wenig nach; ist er leer, so ergibt sich für den Abstand der Adressen im Bildspeicher 18 fast der gesamte Adressumfang. Die Summe der Abstände in beiden Speichern 12 und 18 ist gleich deren Adressumfang.

Zusätzliche Steuermöglichkeiten beruhen auf im folgenden näher erläuterten Maßnahmen. In üblicher Weise kann der Füllstand (Adressendifferenz) des Eingangs-Puffers 12 zur Steuerung der Betriebszustände des Kodierers 14 verwendet werden. Darüber hinaus sind jedoch zusätzliche Informationen verfügbar, z.B. wie groß der relative Anteil an geänderten Bildpunkten an der insgesamt gepufferten Eingangsinformation ist. Diese Information ist durch einen Segment-Integrierer 26 zu gewinnen, der die Zahl der erkannten bzw. verarbeiteten geänderten Bildpunkte kontinuierlich aufintegriert. Diese Zusatzinformation ermöglicht eine Verbesserung der Steuerung, des Kodiervorgangs.

Der wichtigste Vorteil dieses neuartigen Bildzu-Bild-Kodiersystems liegt in der erzielten Reduktion der Arbeitshöchstgeschwindigkeit des Kodierers 14. Der Kodierer 14 ist der umfangreichste und komplexeste Teil der gesamten Schaltungsanordnung auf der Sendeseite. Er muß bei einem konventionellen System mit der Geschwindigkeit arbeiten können, mit der die Bilddaten erzeugt werden (z.B. 10 MHz bei 5 MHz Video-Bandbreite). Bei dem neuartigen System mit Eingangspuffer 12 wird die Arbeitsgeschwindigkeit des Kodierers 14 hingegen durch die Übertragungsrate des Kanals bestimmt Bei einer Datenrate von 2 Mbit/s auf dem Übertragungsweg und Kodeworten von durchschnittlich 4 bit Länge beträgt die Arbeitsgeschwindigkeit 0,5 MHz. Die Geschwindigkeit ist umgekehrt proportional zum Reduktionsfaktor, was die Realisierung komplexer Kodier-Verfahren mit hoher Datenreduktion erleichtert.

Besonders wichtig ist die Geschwindigkeitsreduktion, wenn zur Aufwandsersparnis Prozessoren (Mikroprozessoren, Sinalprozessoren, Bit-Slice-Prozessoren) eingesetzt werden sollen. In diesem Fall sind Anordnungen sinnvoll, die nur noch im geringen Umfang spezielle Logikschaltungen erfordern (z.B. für den Segmentierer 16), während alle anderen Funktionen von einem oder mehreren Prozessoren in Verbindung mit internen und peripheren Speichern durchgeführt werden können.

Der insgesamt beim neuartigen Bild-zu-Bild-Kodiersystem erforderliche höhere Speicherplatzbedarf ist angesichts der erzielbaren Vorteile und der Fortschritte der Speicherintegration von geringer wirtschaftlicher Bedeutung.

Eine Schaltungsanordnung für die Empfangsseite gemäß Fig.2 benötigt keinen Eingangspuffer. Die vom Übertragungskanal mit gleichmäßiger Datenrate angelieferten Signale werden von einem Demultiplexer 30 in Adress- und Bilddaten getrennt und die Bilddaten sofort in einem Dekodierer 32 dekodiert. Die Adressen werden dazu verwendet, die zur Bildrekonstruktion benötigten, örtlich zugeordneten Bildinformationen aus einem Bildspeicher 18' zu lesen. Die dekodierten Bilddaten werden daraufhin in den Bildspeicher 18' eingeschrieben.

Anstelle einer kanalseitigen Pufferung der Eingangsdaten ist bei der hier vorgeschlagenen neuartigen Bildzu-Bild-Dekodierung eigentlich ein Ausgangspuffer notwendig. Auch ein solcher spezieller Pufferspeicher kann jedoch entfallen, da der empfängerseitig für die Bildrekonstruktion benötigte Bildspeicher 18' auch alle Anforderungen an einen Ausgangspuffer mit erfüllt. Das Auslesen der Ausgangsdaten aus dem Bildspeicher 18' erfolgt mit einer vom Einschreibvorgang unabhängigen Adressierung, die den gesamten Adressraum des Bildspeichers 18' kontinuierlich durchläuft.

Eine empfängerseitige Dekoderschaltung 32 muß dementspechend nur den Demultiplexer 30, den Dekodierer 32, einen ohnehin für die Bildrekonstruktion erforderlichen Bildspeicher 18' und einen Adressen-Zähler 22' enthalten.

Die volle Kompatibilität zwischen konventioneller und neuartiger Bild-zu-Bild-Kodierung/Dekodierung ist gewährleistet. In beiden Fällen herrscht eine gleichmäßige Datenrate auf dem Übertragungskanal. Eine kanalseitige Pufferung der empfangenen Signale ist beim konventionellen System erforderlich, beim neuartigen System hingegen aber auch nicht schädlich.

Die Fig. 3 und 4 zeigen nochmals Ausführungsformen der Erfindung, wobei besonderes Gewicht auf die Gliederungund die Ausführung von Funktionselementen, die mit hoher bzw. niedriger Geschwindigkeit arbeiten, gelegt ist.

Fig.3 betrifft die Sendeseite. Die Schaltungsanordnung besteht aus vier Haupt-Baugruppen, dem Eingangs-Pufferspeicher 34, dem Coder-Bildspeicher 36, dem Codier-Prozessor 38 und dem Segmentierer 40. Außerdem ist ein Adressen-Zähler 42 vorhanden.

Sowohl der Eingangs-Pufferspeicher 34 als auch der Coder-Bildspeicher 36 sind als RAM-Speicher (Random access memory) ausgeführt. Sie besitzen eine Speicherkapazität, die ausreicht, um jeweils ein vollständiges Vollbild (frame) in digitaler Form, z.B. mit 8 bit je Bildelement (pel = picture-element) aufzunehmen. Wird ein Bildsignal z.B. mit 720 Bildpunkten je Zeile abgetastet, mit 8 bit je Bildpunkt digitalisiert, und enthält jedes Vollbild 576 aktive Zeilen, so muß jeder Speicher 34, 36 mindestens 414.720 Byte aufnehmen können. Unter Verwendung von Speicherbausteinen, die z.B. je 64 Kbit aufnehmen können, werden mindestens 54 derartige Speicherbausteine benötigt, die in geeigneter Weise zu einem der genannten Bildspeicher 34, 36 zusammenzusetzen sind. Die fortlaufend bei Abtastung und Digitalisierung eines Videosignals erzeugten Bildpunkt-Werte werden in fortlaufenden Adressen der beiden Speicher 34, 36 abgelegt, wobei jeder Bildpunkt einer festen Speicheradresse zugeordnet wird. Jeder der beiden Speicher 34, 36 besitzt mindestens zwei von einander unabhängige Ein-/Ausgabe-Zugriffsmöglichkeiten, die wahlweise gleichzeitig oder zeitlich verschachtelt das Lesen oder Schreiben unter unterschiedlichen Adressen erlauben.

Der Codier-Prozessor 38 ist ein speziell entwikkelter oder für allgemeine Anwendungen geeigneter Signalprozessor, der mit Hilfe eines fest gespeicherten oder ladbaren Programms für die vorgesehene Anwendung programmiert wird. Der Prozessor 38 führt die für den Übertragungskodiervorgang notwendigen Schritte der Signalverarbeitung aus und ist außerdem in der Lage, über seine Ein-Ausgangsschnittstellen dem Eingangspufferspeicher 34 und dem Coder-Bildspeicher 36 Adressenwerte zu übermitteln, Daten zum Einschreiben zu senden und gelesene Daten zu empfangen. Er kann außerdem weitere Adress- und Steuerdaten abgeben oder aufnehmen und kodierte Informationen für die Übertragung über einen Nachrichtenkanal ausgeben.

Der Segmentierer 40 ist ein weiterer, unabhängig arbeitender Schaltungsteil, der an zwei Eingangsschnittstellen einerseits die von der Bildsignalquelle kommenden, digitalen Bildpunktwerte, andererseits die aus dem Coder-Bildspeicher 36 ausgelesenen Bildpunktwerte des vorausgegangenen Vollbildes übernimmt. Dabei handelt es sich um Bildpunkte, die in der Bildebene an genau der gleichen Stelle liegen, aber zeitlich um die Dauer einer Vollbild-Abtastperiode gegeneinander verschoben sind. Aufgabe des Segmentierers 40 ist es, festzustellen, ob innerhalb der aktuellen Vollbild-Abtastperiode an der jeweiligen Stelle im Bild eine signifikante Änderung der Bildinformation aufgetreten ist. Der Segmentierer 40 faßt die geänderten Punkte zu möglichst zusammenhängenden Gruppe (Segmenten) von Bildpunkten zusammen und übermittelt jeweils die Anfangs-und die Endadresse eines Segments an den Codier-Prozessor 38.

Der Adressen-Zähler 42 stellt die Zuordnung zwischen den von der Signalquelle gelieferten Bildpunktwerten bzw. ihrer Lage in der Bildebene und den für sie in den beiden Speichern 34 und 36 vorgesehenen Speicherstellen her. Jeweils zu Beginn einer Vollbild-Abtastperiode wird der Adressen-Zähler 42 auf den Wert Null zurückgesetzt. Mit jeden Taktpuls, mit dem ein Bild abgetastet und digitalisiert wird, wird der Adressen-Zähler 42 um einen Schritt aufwärts gezählt.

Für ein Bildsignal, das z.B. mit 720 Bildpunkten je Zeile und 576 aktiven Zeilen je Vollbild digitalisiert wird, muß der Adressen-Zähler 42 mindestens bis 414.719 zählen können und damit mindestens 19 Binärstellen umfassen.

Die vom Adressen-Zähler 42 gelieferten, fortlaufenden Zahlenwerte, nämlich die jeweiligen vollständigen, binär codierten Zählerstände, werden als Adressen für den Schreib-Eingang (write-port, Address in) des Eingangs-Pufferspeichers 34 verwendet. Mit jedem Taktimpuls, der einen neuen, von der Quelle abgegebenen Bildpunktwert begleitet, wird dieser Wert in die der vorliegenden Adresse zugeordnete Speicherstelle eingeschrieben. Gleichzeitig wird der gleiche Adressenwert auch an den Lese-Adresseneingang (read port, Address in) des Coder-Bildspeichers 36 angelegt, und es wird der in der dieser Adresse zugeordneten Speicherstelle abgelegte Bildpunktwert ausgelesen (read port, Data out). Beide Werte, nämlich der aus dem Coder-Bildspeicher 36 ausgelesene und der gleichzeitig in den Eingangspufferspeicher 34 eingeschriebene Wert werden dem Segmentierer 40 zugeführt, der in der schon beschriebenen Weise daraus eine Änderungs-Entscheidung ableitet.

Die Änderungsentscheidungen werden in Form von Anfangs- und Endadressen der als geändert erkannten zusammenhängenden Bereiche innerhalb der Bildzeilen an den Codier-Prozessor 38 übergeben und dort unter Kontrolle durch das Steuerprogramm in einem bestimmten Teil eines internen Arbeitsspeichers für die spätere Benutzung zwischengespeichert. Die Speicherung erfolgt in Form eines "FIFO-Stack" ("first-in, first-out"), d.h. in einem sequentiell zugreifbaren Bereich, in den Daten in der gleichen Reihenfolge, in der sie eingeschrieben wurden, zu einem späteren Zeitpunkt wieder gelesen werden können. Dieser FIFO-Stack hat die Eigenschaft, daß in zeitlich unregelmäßiger Folge stets neue Adresswerte vom Segmentierer 40 in den Arbeitsspeicher aufgenommen werden und davon unabhängig jeweils die ältesten Werte aus dem Arbeitsspeicher entnommen und gleichzeitig gelöscht werden können. Der Coderprozessor 38 erhält damit die Möglichkeit festzustellen, welche der in dem Eingangspuffer 34 gespeicherten Bildpunktwerte geändert sind, und zwar zu einem Zeitpunkt, zu dem er bereit ist, diesen Wert zu verarbeiten und zu kodieren, so daß die Übertragungskodierung nicht zum gleichen Zeitpunkt erfolgen muß, zu dem die Bilddaten von der Bildsignalquelle abgegeben werden.

Die zentrale Aufgabe des Codier-Prozessors 38 besteht darin, für die in an sich bekannter Weise als geändert erkannten Bildelemente, und nur für diese, geeignete Datenworte zu bestimmen, damit diese mit möglichst geringer, mittlerer Datenrate über einen Übertragungskanal zu einem Empfangsgerät übermittelt werden können. Außerdem muß er dem Empfänger in geeigneter Weise die Lage der übertragenen Bildelemente, d.h. also ihre Adressen mitteilen. Dagegen werden für die Teile des Bildes, in denen sich gegenüber der im Coder-Bildspeicher 36 enthaltenen Information keine signifikante Änderung ergeben hat, keinerlei Daten übermittelt.

Die Arbeitsweise des Codier-Prozessors 38 wird im folgenden anhand eines einfachen Kodierverfahrens und einer einfachen Ausführungsform der Gesamtanordnung erläutert. Dieses Kodierverfahren nutzt die grundsätzlichen Möglichkeiten des Codier-Prozessors 38 nicht aus, sondern es sind wesentlich komplexere und effektivere Kodierverfahren damit realisierbar. Das zur Erläuterung dienende Kodierverfahren ist selbst nicht unmittelbar Gegenstand der Erfindung. Erfindungswesentlich ist vielmehr die Art der Durchführung der Einzelschritte und dies besondere Anordnung der Baugruppen insbesondere auf der Sendeseite, die diese Durchführung erst möglich macht.

Zu einem bestimmten Zeitpunkt liest das Steuerprogramm aus dem FIFO-Stack die nächste, als solche gekennzeichnete Anfangsadresse eines geänderten Bildsegments und schreibt diese in ein Adressenregister. Weiterhin wird aus dem FIFO-Stack die nächste, als solche gekennzeichnete Segment-Ende-Adresse gelesen und in ein Segment-Ende-Register geschrieben. Die Anfangsadresse wird einer geeigneten Kodierung unterworfen, so daß sie später für den Empfänger als solche erkennbar wird und von weiteren, kodierten Daten eindeutig unterschieden werden kann. In dieser Form wird sie in ein Kanal-Ausgaberegister geschrieben. Im Kanalausgaberegister findet eine Parallel-Serien-Umsetzung statt und die enthaltene Information wird bitseriell mit dem Kanalübertragungstakt hinausgeschoben und an den Übertragungskanal weitergeleitet. Die erwähnten Register können Teile des internen Arbeitsspeichers aber auch periphere Speicher sein.

Die im Adressenregister abgelegte Adresse wird nun gleichzeitig an den Eingangs-Pufferspeicher 34 (read port, Address in) und den Coder-Bildspeicher 36 (read-modify-write-port, Address in) weitergegeben. Der unter dieser Adresse im Eingangs-Pufferspeicher 34 enthaltene Bildpunktwert wird gelesen (read port, Data out) und in den Prozessor 38 übernommen. Gleiches gilt für den im Coder-Bildspeicher 36 enthaltenen Wert (read-modify-write-port, Data out). Der Coder-Bildspeicher 36 tritt danach in eine Wartestellung, so daß er später einen verarbeiteten Bildpunktwert unter der gleichen Adresse wieder einschreiben kann (read-modify-write-Zyklus). Die beiden gelesenen Werte können dann z.B. in bekannter Weise im Codier-Prozessor 38 so verarbeitet werden, daß die Differenz zwischen ihnen gebildet wird, diese Differenz einer nichtgleichförmigen Quantisierung unterworfen wird, und der quantisierte Differenzwert einer redundanzbefreienden Codierung (Huffman-Code) unterworfen wird. Das so entstandene Differenz-Codewort wird in das Kanalausgaberegister geschrieben, sobald es vollständig entleert ist, d.h. das vorausgegangene Wort (Adressen- oder Diffenrenzcodewort) vollständig an den Kanal übergeben worden ist. Außerdem wird der quantisierte Diffenrenzwert wieder zu dem subtrahierten Wert aus dem Coder-Bildspeicher 36 hinzuaddiert und das Ergebnis an der gleichen Stelle in diesen Speicher 36 hineingeschrieben, womit der read-modify-write-Zyklus abgeschlossen ist. Daraufhin wird der Wert des Adressenregisters um 1 erhöht und mit dem Wert des Segment-Ende-Registers verglichen. Sofern er nicht größer ist als letzterer, wird der Vorgang des Lesens der Bildpunktwerte aus beiden Speichern 34 und 36 mit der neu entstandenen Adresse wiederholt und eine Kodierung und Ausgabe an den Kanal in der beschriebenen Weise durchgeführt, solange und sooft dies weiterhin der Fall ist. Anderenfalls, wenn nämlich der Adressenwert höher ist als die Segment-Ende-Adresse, wird dieser Vorgang abgebrochen, es wird ein spezielles Segment-Ende-Codewort über das Kanalausgaberegister an den Übertragungskanal gegeben, und es wird anschließend aus dem FIFO-Stack die nächste Segment-Anfangsadresse entnommen und in das Adressenregister übernommen, womit sich derselbe Vorgang der Kodierung eines anderen Segments anschließen kann.

Der Prozessor 38 übernimmt zusätzlich die Aufgabe der Überwachung des Adressierungsablaufes, die notwendig ist, um einen Datenverlust zu vermeiden. Dazu muß einerseits sichergestellt werden, daß die in den Eingangs-Pufferspeicher 34 hineingeschriebenen Bilddaten, sofern sie vom Segmentierer 40 als geändert erkannt wurden, vom Prozessor 38 mit Hilfe der zwischengespeicherten Adressen rechtzeitig aus diesem wieder ausgelesen und anschließend kodiert werden, und zwar bevor der Adressenzähler 42 ein nächstes Mal den gleichen Zählerstand erreicht hat und damit der gespeicherte Wert durch einen neuen Wert überschrieben wird. Damit wird sichergestellt, daß die Verzögerung zwischen dem Schreiben eines Bildpunktes und seinem Wiederlesen nie größer wird als die Dauer einer Vollbild-Abtastperiode. Andererseits muß erreicht werden, daß der Adressenvorrat im Prozessor 38, der im FIFO-Stack abgelegt ist, nie vollständig verbraucht wird, so daß der Prozessor stets in der Lage ist, dem Übertragungskanal kodierte Informationen zu liefern.

Das rechtzeitige Auslesen wird dadurch erreicht, daß im Falle einer zu starken Annäherung der Schreib- und Leseadressen aneinander der Kodiervorgang dahingehend modifiziert wird, daß eine geringere Datenmenge, bezogen auf einen zu kodierenden Bildpunkt, produziert wird, und damit das Abarbeiten der Adressen im FIFO schneller vonstatten geht. Falls der Adressenvorrat nicht mehr genügend groß ist, kann der Prozessor 38 willkürlich neue Adressen produzieren und so z.B. zusätzliche Segmente, die nicht von Segmentierer 40 als geändert erkannt wurden, dem Übertragungskodiervorgang zuführen.

Die Durchführung aller genannten Einzelverarbeitungsschritte in einem programmierbaren Signalprozessor ist für Ausführungsformen der Erfindung besonders vorteilhaft, jedoch keinesfalls zwangsläufig. Auch mit dem Einsatz einer Logikschaltung unter Verwendung verfügbarer Digitalschaltkreise oder eines höherintegrierten, speziell für diesen Zweck entwickelten integrierten Schaltkreises, oder mit einer Zusammenschaltung derartiger Schaltungen oder Schaltkreise mit einem oder mehreren Signalprozessoren lassen sich beachtliche Vorteile erzielen.

Von besonderer Bedeutung ist der Einsatz der beschriebenen Schaltungs-Anordnung für die Realisierung von verbesserten Kodierverfahren, die eine noch stärkere Reduktion der Datenrate erlauben. Dazu sind im wesentlichen nur Erweiterungen bei den Zugriffsmöglichkeiten zum Coder-Bildspeicher 36 notwendig. Es kann z.B. vorteilhaft sein, anstelle eines Read-Modify-Write-Zyklus voneinander unabhängige Lese- und Schreibzyklen zu verwenden. Dabei wird das Wiedereinschreiben der verarbeitenBildpunktwerte nicht sofort nach dem Lesen, sondern erst einige Verarbeitungsschritte später vorgenommen, wodurch eine u.U. nicht vermeidbare Verzögerung bei der Verarbeitung ausgeglichen werden kann. Zu diesem Zweck wird der ins Adressenregister geschriebene Adressenwert, der nun nur für den Lesezyklus verwendet wird, noch in ein weiteres Adressenregister übernommen, das für den Schreibzyklus einzusetzen ist und dessen Inhalt um eine feste Zahl von Verarbeitungstakten verzögert zu erhöhen ist.

Weiterhin kann es vorteilhaft sein, für die Kodierung nicht nur den um eine Vollbild-Abtastperiode verzögerten Bildpunktwert aus dem Coder-Bildspeicher 36 auszulesen, sondern zusätzlich weitere Werte zu benutzen, die z.B. um etwas mehr und etwas weniger als die Dauer einer Halbbild-Abtastperiode verzögert sind und in der Bildebene dem zu kodierenden Bildelement in vertikaler Richtung unmittelbar benachbart sind. Zu diesem Zweck muß im Coder-Bildspeicher 36 ein weiterer Lese-Zugriff erfolgen, für den die im Adressenregister befindliche Leseadresse mitbenutzt werden kann, da die zusätzlich benötigte Adresse in einer festen arithmetischen Zuordnung dazu steht und dementsprechend durch Addition eines festen Zahlenwertes gewonnen werden kann.

Die Arbeitsweise des Codier-Prozessors 38 bzw. der gesamten sendeseitigen Schaltungsanordnung, wie sie oben erläutert ist, läßt sich in sinngemäßer Weise auf erweiterte Anordnungen und komplexere Übertragungskodierverfahren anwenden, ohne daß dazu grundsätzliche Ergänzungen und Zusätze erforderlich sind.

Aus Fig.4 ist zu erkennen, daß auf der Empfangsseite die Schaltungsanordnung die Aufgabe hat, aus den über den Übertragungskanal gelangten Daten das usprüngliche Bildsignal mit einer durch den Kodiervorgang bestimmten Genauigkeit zu rekonstruieren. Die Schaltungsanordnung auf der Empfängerseite ist in der Lage, sowohl erfindungsgemäß als auch konventionell kodierte Daten zu rekonstruieren, sofern bei beiden nur dasselbe Kodierprinzip und dieselbe Codewortzuordnung verwendet wurde.

Die empfangsseitige Schaltungsanordnung besteht aus den beiden Hauptbaugruppen Decodier-Prozessor 46 und Decoder-Bildspeicher 48. Außerdem wird ein Adressenzähler 5o benötigt. Für die Kapazität und die Zugriffsmöglichkeiten des Decoder-Bildspeichers 48 gilt das gleiche wie für den Coder-Bildspeicher 36, ebenso für den Adressenzähler 50 bzw. 42. Der Decodierprozessor 46 hat ähnliche Eigenschaften wie der Codierprozessor 38; benötigt allerdings in einer einfachen Ausführungsform im Vergleich zum Prozessor 38 nur die Möglichkeit des Zugriffs auf den Read-Modify-Write-Port des Bildspeichers 48. Außerdem kann er die vom Übertragungskanal angelieferten kodierten Daten z.B.in einem internen Schieberegister aufnehmen. Der dem zuvor beschriebenen Kodiervorgang entsprechende Dekodiervorgang wird nachfolgend erläutert.

Die bitseriell vom Übertragungskanal gelieferten Daten werden in das erwähnte Kanaleingangs-Schieberegister geschoben. In diesem Register findet eine Serien-Parallelwandlung statt, wobei aufgrund der gewählten Kodierung eine eindeutige Erkennung der jeweils zu einem Kodewort gehörenden Einzelbits und damit eine eindeutige Zerlegung des seriellen Datenstroms in Einzelcodeworten gegeben ist. Darüberhinaus können außerdem Adressen-Codewortevon Differenz-Codeworten und weiteren Steuer-Codeworten, wie z.B. den Segment-Ende-Codeworten,eindeutig unterschieden werden.

Wird im ankommenden Datenstrom ein Adressen-Codewort erkannt und steht dies am Kanaleingangsregister in paralleler Form zur Verfügung, so wird es - nach einer eventuell notwendigen Decodierung zu einem echten Adressenwert - in ein Adressenregister übernommen. Der Inhalt des Adressenregisters wird dann über eine entsprechende Ausgangsschnittstelle des Prozessors 46 an den Decoder-Bildspeicher 48 weitergeleitet, und es wird ein Read-Modify-Write-Zyklus für diese Adresse eingeleitet. Der im Speicher 48 gespeicherte Bildpunktwert wird gelesen und an den Prozessor 46 übergeben, wo er in einem Arbeitsregister abgelegt wird. Im ankommenden Datenstrom sei das nächste Kodewort ein Differenzcodewort; es steht nach einer entsprechenden Wartezeit am Kanaleingangsregister parallel zur Verfügung. Das Kodewort wird dekodiert, wobei genau die ursprünglich auf der Sendeseite bestimmte, quantisierte Differenzamplitude zurückgewonnen wird. Diese wird zu dem in einem Arbeitsregister abgelegten Wert hinzuaddiert und der resultierende Wert wird über eine Ausgabeschnittstelle vom Prozessor 46 zum Bildspeicher 48 übertragen und an der gleichen Adresse hineingeschrieben, an der kurz zuvor ein Wert ausgelesen wurde. Damit ist der Read-Modify-Write-Zyklus abgeschlossen.

In der Folge werden zunächst die am Kanaleingangsregister fortlaufend eintreffenden Kodeworte dahingehend geprüft, ob es sich um Segment-Ende-Codeworte handelt. Ist dies nicht der Fall, so handelt es sich um ein weiteres Differenzkodewort. Der Inhalt des Adressenregisterswird dann um 1 erhöht, und es wird ein neuer Read-Modify-Write-Zyklus eingeleitet. Der aus dem Speicher 48 gelesene Wert und der decodierte Differenzwert werden addiert und das Ergebnis wird wieder in den Speicher 48 eingeschrieben. Mit anschließend vom Kanal gelieferten Differenzcodeworten wird in genau der gleichen Weise verfahren.

Ist das nächste Kodewort jedoch ein Segment-Ende-Codewort, so wird keine Adressenerhöhung vorgenommen und kein Zugriff zum Speicher 48 eingeleitet. Das Auftreten des Segment-Ende-Codeworts beim Empfänger dient als Mitteilung, daß als nächstes Kodewort wieder ein Adressenkodewort zu erwarten ist, welches dann zu dekodieren und in das Adressenregister zu übernehmen ist. Mit diesem neuen Adressenwert werden dann weitere Zugriffe zum Bildspeicher 48 gestartet und unter Verwendung der eintreffenden weiteren Differenzkodeworte die zugehörigen Bildpunktwerte rekonstruiert.

Unabhängig von dem beschriebenen, durch die übertragenen Daten gesteuerten Zugriffsmechanismus erfolgt ein weiterer Zugriff, der durch den dekoderseitigen Adressenzähler gesteuert wird. Die Taktfrequenz für den Adressenzähler entspricht derjenigen, die für die Digital-Analog-Wandlung der Bildinformation zur Bildung eines Videosignals für das empfängerseitige Bildwiedergabegerät benötigt wird. Diese Taktfrequenz wird durch geeignete Synchronisiermaßnahmen, auf die hier nicht näher eingegangen wird, da sie dem Stand der Technik entsprechen, am Empfänger mit Hilfe zusätzlicher Synchronisierzeichen gewonnen und entspricht mit der gewünschten Genauigkeit der Abtastfrequenz bei der senderseitigen Schaltungsanordnung.

Jeweils zu Beginn einer Vollbild-Abtastperiode wird der Adressenzähler auf Null gesetzt und anschließend mit jedem folgenden Digital-Analog-Wandlungs-Impuls aufwärts gezählt. Der Zählerstand dient als Adresse für den Zugriff zum Decoder-Bildspeicher 48 über den Lese-Ausgang. Für jede neue Adresse wird der entsprechende, gespeicherte Bildpunktwert aus dem Speicher 48 gelesen und direkt an den Digital-Analog-Wandler zur Umsetzung weitergegeben. Dabei werden nacheinander sämtliche im Decoder-Bildspeicher 48 enthaltenen Bilddaten innerhalb einer Vollbild-Abtastperiode genau einmal ausgegeben.

Der Prozessor 46 hat ebenfalls die Aufgabe der Adressierungsüberwachung zu übernehmen. Dies gilt insbesondere für die Anfangsphase einer Übertragung bzw. nach einer schwerwiegenden Übertragungsstörung oder -unterbrechung. In diesen Fällen muß ein Gleichlauf der Adressenzähler auf der Empfangs- und der Sendeseite herbeigeführt und anschließend aufrechterhalten werden. Solange dies der Fall ist, kann ein Datenverlust im Decoder durch zu frühes oder zu spätes Auslesen der Bildspeicher-Information ausgeschlossen werden.

Die für die Erfindung wesentlichen und vorteilhaften Merkmale sind nachfolgend nochmals knapp zusammengefaßt:

A) Sendeseite:

- Digitale Eingangsvideosignale werden gleichzeitig einem Segmentierer und einem Eingangs-Pufferspeicher zugeleitet. Der Eingangs-Pufferspeicher und ein Kodier-Bildspeicher werden durch einen von Taktsignalen gesteuerten Adressenzähler adressiert, und der mit verzögerten digitalen Videosignalen vom CodierBildspeicherversorgte Segmentierer erzeugt Bildänderungsdaten. Diese werden zur Übertragungskodierung einem Kodierprozessor zugeführt, der dem Eingangs-Pufferspeicher und dem Kodier-Bildspeicher entsprechende Adressendaten zuleitet, vom Eingangs-Pufferspeicher Eingangsdaten erhält und zum Datenaustausch mit dem Kodier-Bildspeicher in gegenseitiger Funktionsverbindung steht.

- Der Eingangs-Pufferspeicher und der Kodier-Bildspeicher sind vorzugsweise als Speicher mit Direktzugriff (RAM) ausgebildet und jeweils auf eine Speicherkapazität bemessen, die zur Speicherung eines Vollbildes (Zeilenzahl x Bildpunkte je Zeile) bei 8 bit Auflösung pro Bildpunkt ausreichen.

- Der Eingangs-Pufferspeicher und der Kodier-Bildspeicher sind mit je mindestens zwei unabhängigen Eingabe-Ausgabe-Zugriffsmöglichkeiten versehen, die wahlweise gleichzeitig und/oder zeitlich verschachtelt das Lesen und/oder Schreiben bei verschiedenen Adressen erlauben.

- Der Adressenzähler ist als Aufwärtszähler und mit Beginn einer Vollbild-Abtastperiode jeweils auf Null rücksetzbarer Zähler ausgebildet und weist einen auf die Zahl der Bildpunkte eines Vollbildes bemessenen Zählbereich auf. Er zählt mit dem Takt der Bildpunktabtastung und bestimmt mit seinem Zählstand jeweils die Adressen in den Speichern.

- Der Segmentierer erhält an zwei Eingangsschnittstellen die digitalen Eingangsvideosignale bzw. die vom Kodier-Bildspeicher stammenden, um die Dauer einer Vollbild-Abtastperiode gegenüberden Eingangssignalen verzögerten digitalen Videosignale. Durch Vergleich werden signifikante Änderungen der Videosignale ermittelt. Geänderte Videodaten zusammenhängender Bildpunkte innerhalb einer Bildzeile werden als Segment zusammengefaßt und die Anfangs- und Endadresse dieser Zeilensegmente zum Kodier-Prozessor übertragen.

- Der Kodier-Prozessor kann bevorzugt als Signalprozessor mit fest speicherbarem oder austauschbarem Programm ausgebildet sein und steht über Ein- und Ausgabeschnittstellen in Funktionsverbindung mit dem Eingangs-Pufferspeicher, dem Segmentierer und dem Kodier-Bildspeicher.

- Der Kodier-Prozessor speichert die vom Segmentierer in zeitlich unregelmäßiger Folge zugeführten Anfangs-und Endadressen der Zeilensegmente, die geänderte Videodaten repräsentieren, in einem Arbeitsspeicher unter Kontrolle eines Steuerprogramms (FIFO-Stack = first-in, first-out) zwischen. Das Steuerprogramm gewährleistet bei einer späteren Verarbeitung dieser Daten die Reihenfolge der Speicherung durch Entnahme und Löschung der jeweils ältesten Speicherwerte.

- Die aus dem Arbeitsspeicher aufgrund des Steuerprogramms folgerichtig auslesbaren Anfangsadressen der Zeilensegmente, die Änderungen aufweisen, werden einem Adressenregister und die zugehörige Ende-Adresse einem Segment-Ende-Register zur Weiterverarbeitung zugeführt.

- Die in das Adressen-Register übernommene Anfangsadresse gelangt nach einer Kodierung in ein Kanalausgaberegisterzur Parallel-Serien-Umsetzung, die Information bitseriell mit dem Kanalübertragungstakt auf den Übertragungskanal.

- Die in das Adressenregister übernommene Anfangsadresse wird an den Eingangs-Pufferspeicher und an den Kodier-Bildspeicher übertragen und die im Eingangs-Pufferspeicher und im Kodier-Bildspeicher unter dieser Adresse gespeicherten Videosignalwerte werden gleichzeitig in den Kodier-Prozessor zum Verarbeiten übernommen.

- Die Differenzdaten der aus dem Eingangs-Pufferspeicher und dem Kodier-Bildspeicher übernommenen Videosignalwerte werden im Kodier-Prozessor einer Quantisierung und einer redundanzfreien Kodierung unterzogen. Das hierbei entstehende Kodewort wird dann in das Kanalausgaberegister eingegeben, wenn dieses vollständig entleert ist.

- Die quantisierten Differenzdaten werden in Verarbeitungsstufen des Kodier-Prozessors dem vom Kodier-Bildspeicher stammenden subtrahierten Wert hinzuaddiert und dem Kodier-Bildspeicher zur Speicherung an gleicher Adresse wieder zugeführt (Abschluß eines Kodier-Zyklus).

- Der Kodier-Prozessor erhöht nach Abschluß eines Kodier-Zyklus den Wert im Adressenregister um 1, vergleicht das Ergebnis mit dem Wert des Segment-Ende-Registers und wiederholt das Lesen der Videodaten aus dem Eingangs-Pufferspeicher bzw. dem Kodier-Bildspeicher mit den neu entstandenen Adressen solange, bis der Wert des Adressenregisters größer als der des Segment-Ende-Register ist. Der Kodier-Prozessor bricht dann den Vorgang ab, leitet ein Segment-Ende-Codewort auf das Kanalausgaberegister und befiehlt über das Steuerprogramm die Aufnahme einer neuen Anfangsadresse in das Adressenregister.

B. Empfangsseite:

- Die über einen Übertragungskanal gesandten kodierten digitalen Videosignale werden einem Dekodierer zugeführt, der vorteilhaft mit einem Dekodier-Prozessor aufgebaut ist und dekodierte Videodaten und zugehörige Adressendaten über Datenschnittstellen mit einem Dekodier-Bildspeicher austauscht. Ein durch Taktsignale gesteuerter Adressenzähler steuert den Dekodier-Bildspeicher zur Ausgabe des dem jeweiligen Bildpunkt (Adresse) zugehörigen digitalen Videosignales an.

- Der Dekodier-Bildspeicher ist vorzugsweise als Speicher mit Direktzugriff (RAM) ausgebildet und auf eine Kapazität bemessen, die zur Aufnahme eines Vollbildes (Zeilenzahl x Bildpunkt je Zeile) bei 8 bit Auflösung pro Bildpunkt ausreicht.

- Die Eingangsstufe des Dekodier-Prozessors ist als Schieberegister ausgebildet und wandelt die empfangenen bitseriellen Daten in Paralleldaten.

- Die Paralleldaten des Schieberegisters werden im Dekodier-Prozessor auf Adressenworte untersucht, wobei ein erkanntes Adressenwort in ein Adressenregister eingegeben wird. Der Inhalt des Adressenregisters wird anschließend über eine Datenschnittstelle an den Dekodier-Bildspeicher zur Einleitung eines Programmablaufs(Dekodier-Zyklus) an der betreffenden Speicheradresse weitergeleitet, um den dort gespeicherten Bildpunktwert in ein Arbeitsregister des Dekodier-Prozessors zu übernehmen.

- Die einen Adressenwort folgenden Differenzkodewörter werden in einer entsprechenden Verarbeitungsstufe des Dekodierprozessors dekodiert und als ein Datenwort,das die quantisierte Diffenrenzamplitude repräsentiert, dem im Arbeitsregister abgelegten Wert zuaddiert. Der resultierende Wert des Arbeitsregisters wird über eine Datenschnittstelle zum Dekodier-Bildspeicher übertragen. Dort wird mit dem Einschreiben an gleicher Adresse der Dekodier-Zyklus beendet.

- Die Paralleldaten am Ausgang des Empfangs-Schieberegisters im Dekodierprozessor werden auf das Vorhandensein eines Segment-Ende-Codewortes geprüft, wobei das Adressenregister beim Fehlen eines solchen Codewortes um 1 erhöht und ein neuer Dekodier-Zyklus eingeleitet wird. Der aus dem Dekodier-Bildspeicher stammende Bildwert wird zum dekodierten Differenzwert addiert und an gleicher Adresse in den Dekodier-Bildspeicher wieder eingeschrieben.

- Der Dekodier-Prozessor bricht beim Erscheinen eines Segment-Ende-Codewortes den Zugriff zum Dekodier-Bildspeicher ab und startet mit dem Erscheinen eines neuen Adressenwortes die Zyklen für einen Durchlauf.

- Der im Dekodierer vorgesehene Adressenzähler ist als Aufwärtszähler und mit Beginn einer Vollbildperiode auf Null rücksetzbarer Zähler ausgebildet. Er weist einen auf die Zahl der Bildpunkte eines Vollbildes bemessenen Zählbereich auf. Der synchron mit dem Zähltakt der Sendeseite zählende Adressenzähler bestimmt mit seinem Zählstand die Adressen im Dekodier-Bildspeicher.

bildsignale für eine Übertragung mit geringer Datenrate und gleichmäßigem Datenfluß auf dem Übertragungsweg, wobei geänderte Bildanteile nach der Methode der Bild-zu-Bild-Ergänzung

a) auf der Sendeseite synchron zur Folgefrequenz der Zugeführten, aktuellen Bilddaten als Abweichungen zwischen diesen und den rastermäßig entsprechenden, zeitlich um eine Vollbild-Abtastperiode zurückliegenden und auch für die Empfangsseite bereitgestellten Bilddaten bestimmt und

b) auf der Empfangsseite zur Bildrekonstruktion in das vorliegende Vollbild an den betreffenden Stellen eingefügt werden, **dadurch gekennzeichnet, daß** die Aufbereitung der Bewegtbildsignale

a) auf der Sendeseite einen Kodiervorgang einschließt,
- der die Daten für die Übertragung weiter reduziert,
- dessen Arbeitsgeschwindigkeit durch die Datenrate des Übertragungsweges bestimmt ist,
- zu dessen Steuerung zwischengespeicherte Änderungsentscheidungen als Informationen bezüglich der Lage und Ausdehnung erkannter Bild-zu-Bild-Abweichungen dienen,
- dem zwischengespeicherte Bilddatenworte nach variabler Verzögerungszeit zugeführt werden,
- der digitale, kodierte Bildinformationen für Bildsegmente in einem kontinuierlichen, gleichmäßigen Datenfluß für den Übertragungsweg erzeugt;
und

b) auf der Empfangsseite darin besteht:
- die gleichmäßig eintreffenden kodierten Bildinformationen in direkter Verarbeitung, ohne Zwischenspeicherung am Eingang, zu dekodieren,
- Bilddaten mit Hilfe der zugehörigen Adressdaten der Bildrekonstruktion zuzuführen, bei der die Aktualisierungder in einem Bildspeicher befindlichen Bilddaten als Bild-zu-Bild-Ergänzung zu den tatsächlich erforderlichen Zeitpunkten und Zeitspannen erfolgt,
- die vorgenommenen Bild-zu-Bild-Ergänzungen erst nach einer Verzögerungszeit, die zwischen Null und der Dauer einer Vollbild-Abtastperiode betragen kann, wiederzugeben.

**Ansprüche**

1. Verfahren zur Aufbereitung digitaler Bewegt-

2. Verfahren nach Anspruch 1, dadurch gekennzeichnet, daß bei der Aufbereitung der Bewegtbildsignale auf der Sendeseite die Zwischenspeicherung aktueller, noch unkodierter Bilddaten mittels eines RAM-Speichers mit der Kapazität eines Vollbildes erfolgt und, unabhängig davon, ob geänderte oder nicht geänderte Bildanteile repräsentiert werden, diese zwischengespeicherten Bilddaten um eine Zeit zwischen Null und der Dauer einer Vollbild-Abtastperiode verzögert und für die Übertragungskodierung die Daten nicht geänderter Bildanteile beim Auslesen zumindest zum größten Teil übersprungen werden.

3. Verfahren nach Anspruch 1 oder 2, dadurch gekennzeichnet, daß bei der Aufbereitung der Bewegtbildsignale auf der Sendeseite die unkodierten und die kodierten Bilddaten mittels getrennter RAM-Speicher verzögert und zwei unabhängige Zugriffsadressen verwendet werden, die jeweils auf beide RAM-Speicher anzuwenden sind, wobei die eine Zugriffsadresse die Dateneingabe und das Auslesen der für die Segmentierung benötigten kodierten Bilddaten steuert und dabei kontinuierlich alle verfügbaren Adressen durchläuft während die andere Zugriffsadresse das Auslesen der für die Übertragungs-Kodierung benötigten Bilddaten und das Einschreiben der kodierten Bilddaten steuert und im wesentlichen nur die Adressen durchläuft, die geänderten Bildpunkten entsprechen, und daß die Differenz beider Zugriffsadressen den Füllstand der verwendeten Speicher angibt.

4. Verfahren nach Anspruch 3, dadurch gekennzeichnet, daß bei der Aufbereitung der Bewegtbildsignale auf der Sendeseite der aktuelle Füllstand der RAM-Speicher beim Kodiervorgang bezüglich der zu erzeugenden Datenrate zwecks Verhinderung von Überlauf bzw. Leerlaufen der RAM-Speicher berücksichtigt wird.

5. Verfahren nach einem der Ansprüche 1 bis 4, dadurch gekennzeichnet, daß bei der Aufbereitung der Bewegtbildsignale auf der Sendeseite Änderungsentscheidungen bezüglich der Lage und der Ausdehnung geänderter Bildanteile auch zur Beeinflussung der beim Übertragungs-Kodiervorgang zu erzeugenden - Datenrate herangezogen werden.

6. Verfahren nach Anspruch 5, dadurch gekennzeichnet, daß bei der Aufbereitung der Bewegtbildsignale auf der Sendeseite zur Beeinflussung der beim Übertragungs-Kodiervorgang erzeugten Datenrate der relative Anteil geänderter Bildpunkte am gesamten Füllstand des zur Verzögerung der aktuellen, unkodierten Bilddaten dienenden RAM-Speichers benutzt wird.

7. Schaltungsanordnung zur Ausführung des Verfahrens nach einem der Ansprüche 1 bis 6, für die Aufbereitung von Bewegtbildsignalen auf der Sendeseite, gekennzeichnet durch eine Gliederung der Schaltungsteile in:

- einen Eingangspufferspeicher (12, 34), der mit voneinander unabhängig adressierbaren Schreib- und Lesezugriffen, und vorzugsweise als RAM-Speicher ausgebildet ist,
- einen Bildspeicher (18, 36), der mit voneinander unabhängig adressierbaren Schreib- und Lesezugriffen und vorzugsweise als RAM-Speicher ausgebildet ist,
- einen Segmentierer (16, 40) zur Bestimmung geänderter Bildanteile durch Vergleichen von Bilddaten aus dem Eingangspufferspeicher(12, 34) und dem Bildspeicher (18, 36),
- einen Adressenzähler (22, 42), dessen Ausgang den Schreibzugriff des Eingangspufferspeichers (12, 34) sowie am Bildspeicher (18, 36) den zum Segmentierer (16, 40) führenden Lesezugriff steuert,

und in

- eine Baugruppe (38), in der alle Schaltungsteile eine geringe Arbeitshöchstgeschwindigkeit erfordern, insbesondere mit:
  - einem Zwischenspeicher (20) für Anfangs- und Endadressen von Bildsegmenten, der an den Ausgang des Segmentierers (16, 40) angeschlossen ist,
  - einem Übertragungskodierer (14), der für geänderte Bildanteile die zu übertragenden Ausgangskodeworte erzeugt und diese an einen Multiplexer (28) sowie - vorzugsweise in rekonstruierter Form - an den Schreibzugriff des Bildspeichers (18, 36) liefert,
  - einer Steuerung (24), die Adressdaten aus dem Zwischenspeicher (20) auswertet und die zum Übertragungskodierer (14) führenden Lesezugriffe des Eingangspufferspeichers (12, 34) und des Bildspeichers (18, 36) mit variabler Verzögerung steuert, sowie
  - dem Multiplexer (28) für das Verschachteln von kodierten Bilddaten, Adress- bzw. Steuerkodeworten, einschließlich P/S-Wandlung, an der Schnittstelle zum Übertragungsweg.

8. Schaltungsanordnung zur Ausführung des Verfahrens nach Anspruch 1, für die Aufbereitung von Bewegtbildsignalen auf der Empfangsseite, gekennzeichnet durch eine Gliederung der Schaltungsteile in:
- einen Bildspeicher (18', 48), der mit voneinander unabhängig adressierbaren Schreib - und Lesezugriffen und vorzugsweiseals RAM-Speicher ausgebildet ist,
- einen Adressenzähler (22', 50), dessen Ausgang den Lesezugriff des Bildspeichers (18', 48) steuert, und in
- eine Baugruppe (46), in der alle Schaltungsteile eine geringe Arbeitshöchstgeschwindigkeit erfordern, insbesondere mit:
  - einem Übertragungsdekodierer (32), der Bilddaten für geänderte Bildanteile rekonstruiert und in den Bildspeicher (18', 48) speist, und
  - einem an der Schnittstelle zum Übertragungsweg befindlichen Demultiplexer (30) für die S/P-Wandlung der empfangenen Eingangskodeworte sowie deren Trennung in Bilddaten sowie Adress- bzw. Steuerkodeworte für die Steuerung des Übertragungsdekodierers (32) und von zu ihm führenden Lese- und Schreibzugriffen am Bildspeicher (18', 48).

9. Schaltungsanordnung nach Anspruch 7 oder 8, dadurch gekennzeichnet, daß die Schaltungsteile einer Baugruppe (38, 46), die eine geringe Arbeitshöchstgeschwindigkeit erfordern, in einem programmierbaren Koder- bzw. Dekoder-Prozessor vereinigt sind.

## Claims

1. A method for processing digital moving image signals for transmission with low data rates and constant data flow on the transmission channel, wherein changed image parts according to the method of frame-to-frame replenishment are
   a) determined on the transmitting side synchronously to the frequency of the supplied current image data, as deviations between these and the image data with corresponding raster locations which are temporally behind by a full frame pickup period, and also provided for transmission to the receiving side, and
   b) inserted at the relevant positions in the present full image for image reconstruction on the receiving side, characterised in that the processing of the moving image signals
   a) includes on the transmitting side a coding process
   - which further reduces the amount of data for transmission,
   - the working speed of which is determined by the data rate of the transmission channel,
   - for the control of which temporarily stored change decisions serve as information about the position and extend of recognised frame-fo-frame deviations,
   - to which are supplied temporarily stored image data words after a variable delay time,
   - which generates digital coded image information for image segments in a continuous constant data flow for the transmission channel; and
   b) comprises on the receiving side
   - decoding the constantly received coded image information in direct processing, without temporary storage at the input,
   - supplying image data with the aid of the corresponding address data to the image reconstruction, in which the updating of the image data stored in a frame memory occurs as frame-to-frame replenishment to the actual time instants and time intervals required,
   - reproducing the replenished image data after a time delay, which can be between nil and the duration of a full frame pickup period.

2. A method according to claim 1, characterised in that when processing the moving image signals on the transmitting side the temporary storage of current, still uncoded image data occurs by means of a RAM memory with the capacity of a full frame, and irrespective of whether changed or unchanged image parts are represented, these image data stored temporarily are delayed by a time between nil and the duration of a full frame pickup period, and for the transmission coding the data of unchanged image parts are stripped, at least to a large extend, during when readout.

3. A method according to claim 1 or 2,

characterised in that during the processing of the moving image signals on the transmitting side the uncoded and the coded image data are delayed by means of separate RAM memories and two independent access addresses are used, which are applied to the two RAM memories, respectively, wherein the one access address controls the uncoded data input and the readout of the coded image data required for segmenting and in this way continually runs through all available address values, whilst the other access address controls the readout of the image data required for the transmission coding and the writing of the coded image data, and mainly runs through only those addresses which correspond to the changed picture elements, and in that the difference between both access addresses indicates the level of occupancy of the memories used.

4. A method according to claim 3, characterised in that during the processing of the moving image signals on the transmitting side the current level of occupancy of the RAM memories is considered in the coding process with respect to the data rate to be generated for the purpose of preventing the RAM memories from overflowing or becoming empty.

5. A method according to one of claims 1 to 4, characterised in that when processing the moving image signals on the transmitting side change decisions with respect to the position and to the extent of changed image parts are also used for influencing the data rate to be generated by the transmission coding process.

6. A method according to claim 5, characterised in that when processing the moving image signals on the transmitting side for influencing the data rate generated in the transmission coding process the relative portion of changed picture elements with respect to the total level of occupancy of the RAM memory serving to delay the current uncoded image data is used.

7. A circuit arrangement for executing the method according to one of claims 1 to 6, for the processing of moving image signals on the transmitting side, characterised by a grouping of the circuit parts into:
  - an input buffer memory (12, 34) which is formed with the writing and reading access able to be addressed independently of each other and preferably as a RAM memory,
  - a frame memory (18, 36) which is formed with the writing and reading access able to be addressed independently of each other and preferably as RAM memory,
  - a segmenter (16, 40) for determining changed image parts by comparison of image data from the input buffer memory (12, 34) with those of the frame memory (18, 36),
  - an address counter (22, 42), the output of which controls the writing access of the input buffer memory (12, 34) as well as the reading access leading to the segmenter (16, 40) at the frame memory (18, 36) , and
  - a module (38) in which all circuit parts require a low maximum working speed, in particular with
    - a temporary storage (20) for start and end addresses of image segments, which is connected to the output of the segmenter (16, 40),
    - a transmission coder (14) which, for the changed image parts, generates the output code words to be transmitted and delivers these to a multiplexer (28) as well as - preferably in reconstructed form - to the writing access of the frame memory (18, 36),
    - a control (24) which evaluates the address data from the temporary memory (20) and controls the reading access, of the input buffer memory (12, 34) and of the frame memory (18, 36), with a variable delay, said access leading to the transmission coder (14), as well as with
    - the multiplexer (28) for interleaving of coded image data, address or control code words, including P/S-conversion at the interface to the transmitting path.

8. A circuit arrangement for executing the method according to claim 1 for processing moving image signals on the receiving side, characterised by a grouping of the circuit parts into:
  - a frame memory (18', 48) which is formed with writing and reading access able to be addressed independently of each other and preferably as a RAM memory,
  - an address counter (22', 50), the output of which controls the reading access of the frame memory (18', 48), and into
  - a module (46) in which all circuit parts require a low maximum working speed, in particular with

- a transmission decoder (32) which reconstructs image data for the changed image parts and feeds them into the frame memory (18', 48), and
- a demultiplexer (30) located at the interface to the transmitting path for the S/P-conversion of the received input code words as well as their separation into image data as well as address or control code words for the control of the transmission decoder (32) and reading and writing access at the frame memory (18', 48), leading to said decoder.

9. A circuit arrangement according to claim 7 or 8, characterised in that the circuit parts of a module (38, 46) which require a low maximum working speed are combined in a programmable coder or decoder processor.

**Revendications**

1. Procédé pour le traitement de signaux d'image mobile numériques en vue de la transmission sur le chemin de transmission avec une cadence de données faible et un flux de données régulier, dans lequel des portions d'image modifiées selon la méthode de restitution image par image :

a) sont déterminées du côté émission en synchronisme avec la fréquence de récurrence des données d'image actuelles appliquées sous forme d'écarts entre ces données et les données d'image correspondant à la trame, renvoyées chronologiquement sur une période de balayage de l'image entière et également mises à la disposition du côté réception, et

b) sont insérées du côté réception, aux emplacements correspondants dans l'image complète précédente pour la reconstruction de l'image,

caractérisé en ce que :

a) - du côté émission, le traitement des signaux d'image mobile comprend un processus de codage qui réduit davantage les données pour la transmission,

- la vitesse de travail dudit processus étant déterminée par la cadence de données du chemin de transmission,

- la commande dudit processus utilisant des décisions de modifications mémorisées dans une mémoire-tampon comme informations relatives à la situation et l'étendue d'écarts d'image à image reconnus,

- ledit processus étant appliqué aux mots de données d'image stockés en mémoire-tampon après un temps de retard variable, et

- ledit processus générant des informations d'image codées numériques p our des segments d'image en un flux de données régulier et continu pour le chemin de transmission, et

b) du côté réception, le traitement des signaux consiste à décoder les informations d'image codées reçues régulièrement par une transformation directe sans mémorisation intermédiaire à l'entrée,

- à alimenter des données d'image au moyen des données d'adresses correspondantes de la reconstruction d'image, d'où il résulte une actualisation des données d'image se trouvant dans une mémoire d'image par modification d'image en image aux instants et intervalles de temps nécessaires effectifs, et

- à renvoyer les modifications obtenues d'image en image en premier lieu après un temps de retard qui peut être compris entre zéro et la durée d'une période de balayage d'une image entière.

2. Procédé selon la revendication 1, caractérisé en ce que pendant le traitement des signaux d'image mobile du côté émission, les données d'image actuelles, encore non codées, sont mémorisées temporairement au moyen d'une mémoire RAM ayant la capacité d'une image entière et, indépendamment de ce que des portions d'image modifiées ou des portions d'image non modifiées sont représentées, ces données d'image mémorisées temporairement sont retardées d'un temps compris entre zéro et la durée d'une période de balayage d'une image entière et pour le codage de transmission , les données de portions d'image non modifiées sont pour la plus grande partie sautées lors de l'extraction par lecture.

3. Procédé selon la revendication 1 ou 2, caractérisé en ce que pendant le traitement des signaux d'image mobile du côté émission, les données d'image non codées et les données d'image codées sont retardées au moyen de mémoires RAM séparées et deux adresses d'accès indépendantes sont utilisées, lesquelles adresses d'accès sont appliquées aux deux mémoires RAM, une adresse d'accès commandant l'introduction de données et la lecture des données d'image codées nécessaires pour la segmentation et en plus parcourant continuellement toutes les adresses disponibles pendant que l'autre adresse d'accès commande la lecture des données d'image nécessaires pour le codage de transmission et l'écriture des données d'image codées et ne parcourt essentiellement que les adresses qui correspondent à des points d'image modifiés, et en ce que la différence entre les deux adresses d'accès indique le niveau de chargement de la mémoire utilisée.

4. Procédé selon la revendication 3, caractérisé en ce que pour le traitement des signaux d'image mobile du côté émission, il est tenu compte de l'état de remplissage actuel de la mémoire RAM pendant le codage concernant la cadence de données à générer dans le but d'empêcher le débordement ou le vidage de la mémoire RAM.

5. Procédé selon une des revendications 1 à 4, caractérisé en ce que pour le traitement des signaux d'image mobile du côté émission, des décisions de modification concernant la situation et l'étendue de portions d'image modifiées sont également déduites pour influencer la cadence de données à générer pendant le processus de codage de transmission.

6. Procédé selon la revendication 5, caractérisé en ce que pour le traitement des signaux d'image mobile du côté émission afin d'influencer la cadence de données générée pendant le processus de codage de transmission, la portion relative des points d'image modifiés est utilisée au niveau de chargement commun de la mémoire RAM servant au retardement des données d'image non codées actuelles.

7. Montage pour la mise en oeuvre du procédé selon une des revendications 1 à 6 en vue du traitement de signaux d'image mobile du côté émission, caractérisé par un agencement des éléments de circuits en :
- une mémoire-tampon d'entrée (12, 34) qui est réalisée avec des accès d'écriture et de lecture adressables indépendamment l'un de l'autre, et de préférence sous forme d'une mémoire RAM,
- une mémoire d'image (18, 36) qui est réalisée avec des accès d'écriture et de lecture adressables indépendamment l'un de l'autre, et de préférence sous forme d'une mémoire RAM,
- un segmenteur (16, 40) pour déterminer des portions d'image modifiées par comparaison de données d'image extraites de la mémoire-tampon d'entrée (12, 34) et de la mémoire d'image (18, 36),
- un compteur d'adresses (22, 42) dont la sortie commande l'accès d'écriture de la mémoire-tampon d'entrée (12, 34) ainsi que l'accès de lecture de la mémoire d'image (18, 36) vers le segmenteur (16, 40), et
- un dispositif (38) dans lequel toutes les parties du circuit nécessitent une faible vitesse de travail maximum, en particulier avec :
  - une mémoire-tampon (20) pour des adresses de début et de fin de segments d'image, connectée à la sortie du segmenteur (16, 40),
  - un codeur de transmission (14) qui génère les mots de code de sortie à transmettre pour les portions d'image modifiées et qui livre ces mots de code de sortie à un multiplexeur (28) ainsi que - de préférence sous forme reconstruite - à l'accès d'écriture de la mémoire d'image (18, 36),
  - une commande (24) qui exploite les données d'adresses provenant de la mémoire-tampon (20) et qui commande les accès de lecture de la mémoire-tampon d'entrée (12, 34) et de la mémoire d'image (18, 36) vers le codeur de transmission (14) avec un retard variable, ainsi que
  - un multiplexeur (28) pour l'entralecement des données d'image codées, des mots de code d'adresse et de commande, y compris la conversion parallèle/série à l'interface vers le chemin de transmission.

8. Montage pour la mise en oeuvre du procédé selon la revendication 1, en vue du traitement de signaux d'image mobiles du côté réception, varactérisé par un agencement des parties du circuit en :
- une mémoire d'image (18', 48) qui est réalisée avec des accès d'écriture et de lecture adressables indépendamment l'un de l'autre, et de préférence sous forme d'une mémoire RAM,
- un compteur d'adresses (22', 50) dont la sortie commande l'accès de lecture de la mémoire d'image (18', 48), et
- un dispositif (46) dans lequel toutes les parties du circuit nécessitent une faible vitesse de travail maximum, en particulier avec
  - un décodeur de transmission (32) qui reconstruit les données d'image pour des portions d'image modifiées et qui fournit ces données reconstruites à la mémoire d'image (18', 48), et

- un démultiplexeur (30) situé à l'interface vers le chemin de transmission pour assurer la conversion série/parallèle des mots de code d'entrée ainsi que leur séparation en données d'image, mots de code d'adresse et mots de code de commande pour la commande du décodeur de transmission (32) et des accès de lecture et d'écriture de la mémoire d'image vers le décodeur.

9. Montage selon la revendication 7 ou 8, caractérisé en ce que les éléments du circuit d'un dispositif (38, 46), qui nécessitent une faible vitesse de travail maximum, sont réunies dans un processeur codeur programmable et un processeur décodeur programmable, respectivement

FIG. 1

FIG. 2

EP 0 089 919 B1

FIG. 3

FIG. 4